# EUROPÄISCHE PATENTSCHRIFT

(11) **EP 1 845 279 B1**
(45) Veröffentlichungstag und Bekanntmachung des Hinweises auf die Patenterteilung: **07.01.2009**
(21) Anmeldenummer: 07007156.8
(22) Anmeldetag: 05.04.2007
(51) Int. Cl.: F16F 9/38

(54) **Schutzrohr für Stoßdämpfer**
Sheath tube for shock absorbers
Tube protecteur pour amortisseur

(30) Priorität: 11.04.2006 DE 202006006021 U
(43) Veröffentlichungstag der Anmeldung: 17.10.2007
(73) Patentinhaber: AL-KO KOBER AG, D-89359 Kötz (DE)
(72) Erfinder: Friess, Gerhard, 48340 Amorebieta (ES)
(74) Vertreter: Ernicke, Klaus Stefan

(56) Entgegenhaltungen:
- DE-A1- 19 653 393
- JP-A- 5 106 675
- US-A1- 2005 121 274

## Beschreibung

Die Erfindung betrifft ein Schutzrohr für einen Stoßdämpfer mit den Merkmalen im Oberbegriff des Anspruchs 1. Ein solches Schutzrohres ist aus der US 2005/0121274 bekannt.

Aus der Praxis ist es bekannt, den Arbeitszylinder eines Stoßdämpfers mit einem metallischen Schutzrohr zu umgeben, welches mit der Kolbenstange an einer Stelle unterhalb des am Stangenende angebrachten Lagerelements verbunden ist. Eine solche Bauweise ist fertigungs-, kosten- und montageaufwändig.

Es ist Aufgabe der vorliegenden Erfindung, ein besseres Schutzrohr aufzuzeigen.

Die Erfindung löst diese Aufgabe mit den Merkmalen der Ansprüche 1 und 9.
Die beanspruchte Ausgestaltung des Schutzrohres erfordert einen geringen Fertigungs- und Montageaufwand und ist kostengünstig. Die Clipsverbindung bietet eine einfache, schnelle und vor allem kostengünstige Montagemöglichkeit für das Schutzrohr. Letzteres kann dank der Clipsverbindung einfach auf das Lagerelement am Ende der Kolbenstange aufgesteckt werden und ist durch Form- und Spannschluss fixiert. Die Ausbildung des Schutzrohres vereinfacht und verbilligt außerdem die Ausgestaltung der anderen Zylinderteile, insbesondere der Kolbenstange und deren Verbindung mit dem endseitigen Lagerelement.

Das Schutzrohr kann mit seiner Kappe das Lagerelement weitgehend übergreifen und umhüllen. Es kann hierdurch gegen Umwelteinflüsse besser geschützt werden. Außerdem ergibt sich eine in den Konturen besser geschlossene und auch ästhetisch ansprechendere Erscheinungsform. Aus Design- und Fertigungsgründen ist es vorteilhaft, wenn die Kappe an das Schutzrohr angeformt und mit diesem einteilig verbunden ist. Dieses Teil kann aus einem geeigneten Werkstoff hergestellt werden, insbesondere aus Kunststoff. Bei einer solchen Ausgestaltung kann das Schutzrohr elastisch verformbar sein, was Vorteile bei der Montage und auch im Betrieb des Stoßdämpfers mit sich bringt.

Die Clipsverbindung zwischen Schutzrohr und Lagerelement kann als montagefreundliche federnde Schnappverbindung ausgeführt sein, die sich bei Bedarf auch wieder lösen lässt. Die Verbindung kann zusätzlich durch einen weiteren Formschluss gesichert werden, indem ein Teil des Lagerelementes, z.B. ein Lagerstift oder eine Hülse durch zwei gegenüberliegende Augen an der Kappe ragt. Die Verbindung kann schwingungsfest und klappersicher gemacht werden. Außerdem lässt sich die Lage des Schutzrohrs gegenüber dem Lagerelement und den anderen Stoßdämpferteilen betriebssicher einstellen und fixieren.

Das Schutzrohr kann ferner durch ein Stützelement, insbesondere eine Stützscheibe, an der Kolbenstange zusätzlich geführt und stabilisiert werden. Dies führt einerseits zu einer hohen Formstabilität des Schutzrohrs, auch bei weit ausgeschobener Kolbenstange. Andererseits können Schwenkbewegungen des Schutzrohrs um die Lagerachse vermieden werden. Zudem distanziert das Stützelement, ggf. zusammen mit inneren Vorsprüngen am unteren Rohrende, das Schutzrohr radial vom Außenrohr. Dies ist zum Schutz vor Wärmeeinwirkung des im Dämpferbetrieb sich aufheizenden Außenrohrs vorteilhaft und bildet außerdem einen Luftkanal für kühlende Luftströmungen. Hierfür können auch Löcher in der Stützscheibe und vergrößerte Augen an der Kappe nützlich sein.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: einen Stoßdämpfer in perspektivischer Explosionsdarstellung,
- Figur 2:: eine perspektivische Darstellung eines montierten Stoßdämpfers,
- Figur 3:: ein Schutzrohr in Seitenansicht,
- Figur 4 und 5:: das Schutzrohr von Figur 3 in Draufsicht gemäß Pfeil IV und geklappter Seitenansicht gemäß Pfeil V,
- Figur 6:: eine vergrößerte Seitenansicht einer Kappe des Schutzrohres,
- Figur 7:: eine vergrößerte perspektivische Darstellung des Schutzrohres und des Lagerelements in einer Explosionsdarstellung,
- Figur 8:: eine aufgebrochene perspektivische Darstellung einer Variante des Schutzrohres und des Stoßdämpfers
- Figur 9 und 10:: eine Draufsicht und einen Schnitt durch den Stoßdämpfer und das Schutzrohr von Figur 8 und
- Figur 11 bis 14:: verschiedene Ansichten des Schutzrohrs der Variante von Figur 8.

Die Erfindung betrifft ein Schutzrohr (12) für einen Stoßdämpfer (1). Unter einem Stoßdämpfer (1) wird generell ein fluidischer Zylinder verstanden, wobei dieser Begriff außer den klassischen Stoßdämpfern auch Gasfedern oder dergleichen umfasst. Die Erfindung betrifft außerdem einen mit einer Schutzkappe (18) ausgerüsteten Stoßdämpfer (1).

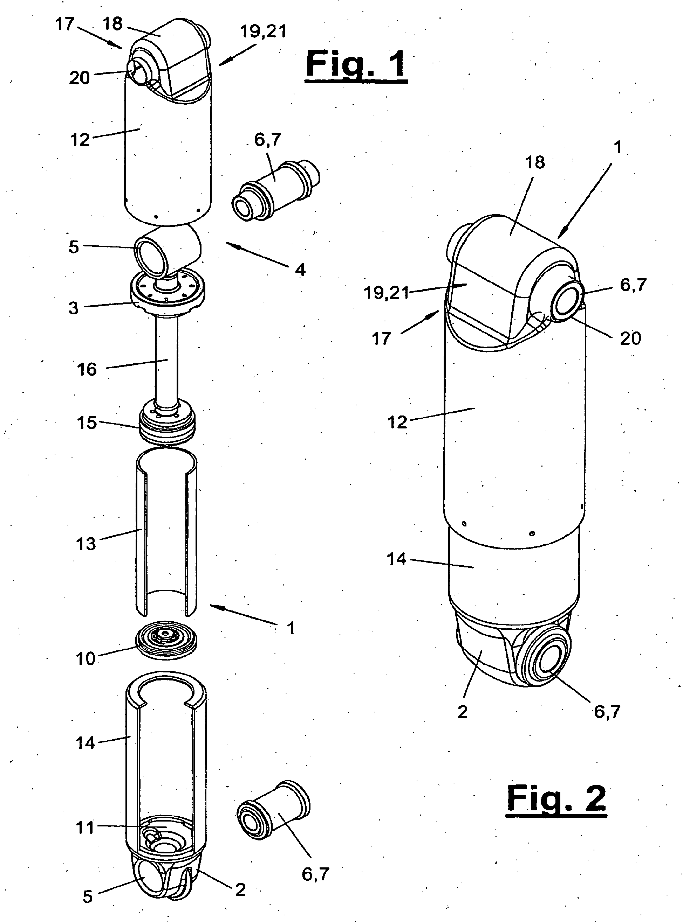

Figur 1 zeigt einen solchen Stoßdämpfer (1) in einer beispielhaften ersten Ausführungsform als Zweirohr-Stoßdämpfer. Er besteht aus einem Kolben (15) mit einer Kolbenstange (16), die in einem Arbeitszylinder oder Innenrohr (13) längsbeweglich geführt sind. Der Kolben (15) hat ein oder mehrere Drosselöffnungen sowie Rückschlagventile zum Überströmen des Dämpffluids von der einen zur anderen Kolbenseite. Am Fuß des Arbeitszylinders (13) ist ein Bodenventil (10) angeordnet, welches mit einem Ventilsitz (11) an einem Endstück oder Bodenstück (2) des Stoßdämpfers (1) zusammenwirkt. Der Arbeitszylinder (13) ist außenseitig mit radialem Abstand von einen Außenrohr (14) umgeben. Beide Rohre (13,14) sind mit den Endstücken (2,3) verbunden. Außenseitig auf dem Außenrohr (14) ist ein Schutzrohr (12) angeordnet, welches mit einem Lagerelement (4) am oberen Ende der Kolbenstange (16) verbunden werden kann. Das Schutzrohr (12) kann über das Lagerelement (4) und das Außenrohr (14) gestülpt werden und wird bei den Kolbenstangenbewegungen mitbewegt.

Das Lagerelement (4) kann in der dargestellten Ausführungsform aus einem am Kolbenstangenende befestigten ring- oder hülsenförmigen Lagerauge (5) und einem dort durch Einpressen oder dergl. montierten Lagerstift (6) bestehen, der z.B. in Form einer Hülse (7) ausgebildet ist. Der Lagerstift (6) durchdringt das Schutzrohr (12) und ist mit externen Lagerteilen, z.B. einem Lagerbock und einer durchgesteckten Lagerachse (nicht dargestellt) verbunden. Am Bodenstück (2) kann sich ein ähnlich ausgebildetes Lagerelement (4) mit einem angeformten Lagerauge (5) und einem massiven oder ebenfalls hülsenförmigen Lagerstift (6,7) befinden. Über die Lagerelemente (4) sind die Enden des Stoßdämpfers (1) an ihren Montagestellen schwenkbar gelagert und befestigt.

Das Schutzrohr (12) besteht aus einem zylindrischen Rohrteil, welches über das Außenrohr (14) gestülpt ist und bei den Kolbenbewegungen an diesem entlang gleiten kann. Das Schutzrohr (12) ist geringfügig größer als das Außenrohr (14) und weist am unteren Ende punktförmige Einprägungen (29) oder andere Vorsprünge auf, die am Außenrohrmantel anliegen und für eine Zentrierung sowie für eine radiale Distanzierung sorgen.

Das Schutzrohr (12) weist am oberen Ende oder am Kopfbereich (17) eine Kappe (18) auf, die das Lagerelement (4) und insbesondere das mit der Kolbenstange (16) verbundene Lagerauge (5) außenseitig umgreifen und umhüllen kann. Die Kappe (18) ist z.B. sattelartig ausgebildet. Vorzugsweise ist sie an das Schutzrohr (12) angeformt und mit diesem einstückig verbunden. Das Schutzrohr (12) kann aus einem beliebig geeigneten Material bestehen. Vorzugsweise ist es aus Kunststoff gefertigt. Das Schutzrohr (12) kann elastisch verformbar sein und kann insbesondere bei der Montage seine Querschnittsform begrenzt ändern und springt dann wieder in seine Ausgangsform zurück.

Die Kappe (18) dient zur Befestigung des Schutzrohres (12) am Lagerelement (4) und weist ein Clipselement (22) zur Bildung einer Clipsverbindung (21) mit dem Lagerelement (4) auf. Die Kappe (18) kann ferner eine dem Lagerauge (5) nachgeformte Lageraufnahme (19) mit zwei zur Seite hin offenen Augen (20) besitzen, die einander diametral zur Stoßdämpferlängsachse gegenüberliegen.

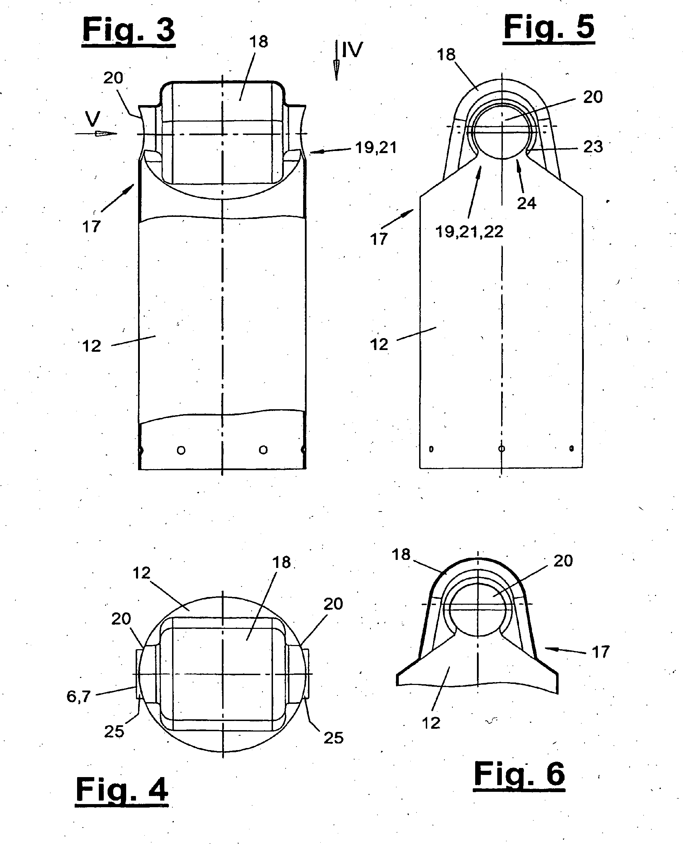

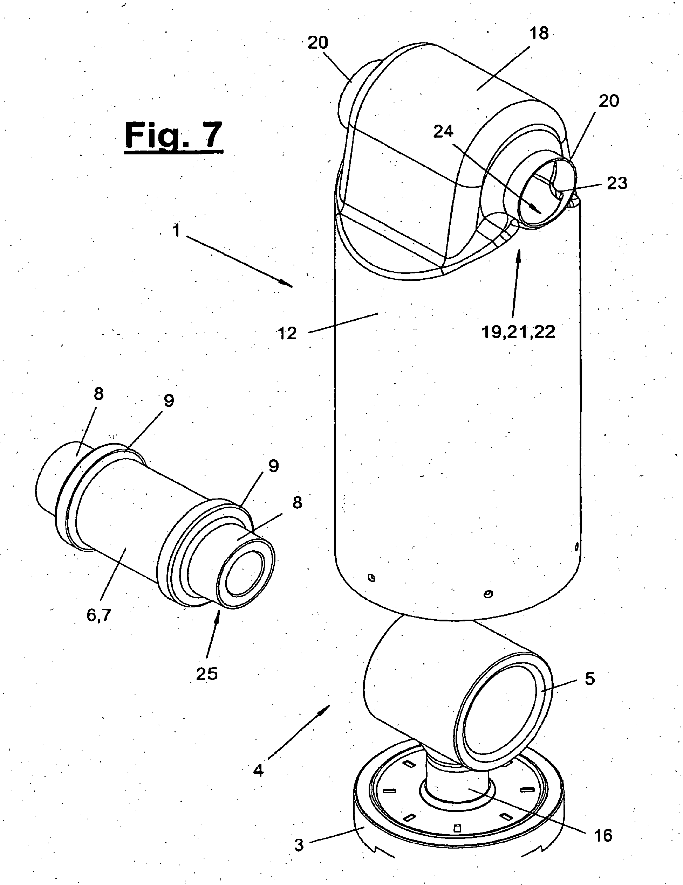

Wie Figur 5, 6 und 7 verdeutlichen, besitzt das Clipselement (22) mindestens einen gebogenen und federnden Kragen (23) mit einer verengten und nach unten zur Schutzrohröffnung gerichteten Zugangsöffnung (24), die zum Aufstecken auf das Lagerelement (4) dient. Zur Sicherung der Verbindung kann an jedem der seitlichen Augen (20) jeweils ein Kragen (23) angeordnet sein, der von der Augenwandung gebildet wird. Figur 7 verdeutlicht diese Ausgestaltung. Die Krägen (23) und die Zugangsöffnungen (24) sind an die Form des Lagerstifts (6) angepasst. Der gebogene Kragen (23) umgreift den Lagerstift (6) an mehr als der Hälfte seines Umfangs und hält diesen nach dem Aufstecken federnd fest.

Wie Figur 7 in der Vergrößerung verdeutlicht, besteht der hohle Lagerstift (6) bzw. die Hülse (7) aus einem verdickten Mittelteil und zwei vorstehenden Enden. Der Lagerstift (6) kann aus einem metallischen Grundmaterial bestehen. Auf dem Mantel der endseitigen Überstände (25) kann ein elastisches Material aufgebracht sein, welches z.B. aus Gummihülle ausgebildet ist. An diesem elastischen Mantel (8) greift der Kragen (23) an und drück sich hier ggf. etwas ein, wobei zwischen dem gebogenen Kragen (23) und dem Mantel (8) eine enge formschlüssige Verbindung steht.

Der Lagerstift (6) kann in geeigneter Weise im zylindrischen Lagerauge (5) montiert sein, wobei z.B. das dickere Mittelteil des Lagerstifts (6) ins Auge eingepresst wird. Am Übergang zwischen dem dickeren Mittelteil und dem dünneren Stift- oder Hülsenenden kann eine elastische Verdickung (9) angeordnet sein, die z.B. aus einem Gummiring besteht und die sich dichtend an die Lageraugenränder anlegt.

Die Überstände (25) des Lagerstiftes (6) ragen beidseits über das Lagerauge (5) hinaus und ragen in Montagestellung auch durch die seitlichen Augen (20) an der Kappe (18). Die ringförmigen Augen (20) haben an der Unterseite und im Bereich der Zugangsöffnung (24) eine verdünnte Wandung, die in der Endstellung den Überstand (25) von unten her festhält. Die Augen (20) sind im Durchmesser an die Stift- oder Hülsenenden angepasst. Wie Figur 4 verdeutlicht, ragt der Lagerstift (6) beidseits mit den Überständen (25) aus der Kappe (18) und den Augen (20) vor.

Zur Montage wird das Schutzrohr (12) über das Lagerelement (4) und das Außenrohr (14) gesteckt und auf das Lagerelement (4) mit dem zuvor montierten Lagerstift (6) gedrückt. Falls der Lagerstift (6) länger als der Innendurchmesser des Schutzrohres (12) sein sollte, kann sich letzteres beim Aufstecken entsprechend verformen und eine ovale Querschnittsform annehmen. Beim Aufstecken weiten sich die Krägen (23) elastisch und schnappen über die durch die Zugangsöffnungen (24) eingeführten Stiftenden bzw. Überstände (25). Hierbei kann sich der untere Augenwandungsbereich nach außen verformen und ausbeulen, so dass der Lagerstift (6) nach oben in den Clipschluss und Klemmschluss eintreten kann. Anschließend schnappt der untere Wandungsbereich der Augen (20) wieder zurück und untergreift den durch das Auge (20) ragenden Überstand (25). Hierdurch wird neben der Clipsverbindung (21) eine weitere formschlüssige Verbindung geschaffen.

Die Kappe (18) kann je nach Ausgestaltung nur mit den beidseitigen Krägen (23) bzw. den Augen (20) einen Kontakt und eine Verbindung mit dem Lagerelement (4), insbesondere dem Lagerstift (6) haben. Zusätzlich kann die Kappe (18) im Innenbereich eine Formanpassung an das Lagerauge (5) haben und hier mit Kontakt und ggf. mit einer formschlüssigen Führung anliegen. Die Innenwandung der Kappe (18) kann z.B. U-förmig gestaltet sein und das Lagerauge (5) in der oberen Hälfte formschlüssig umschließen und für eine drehfeste Führung sorgen.

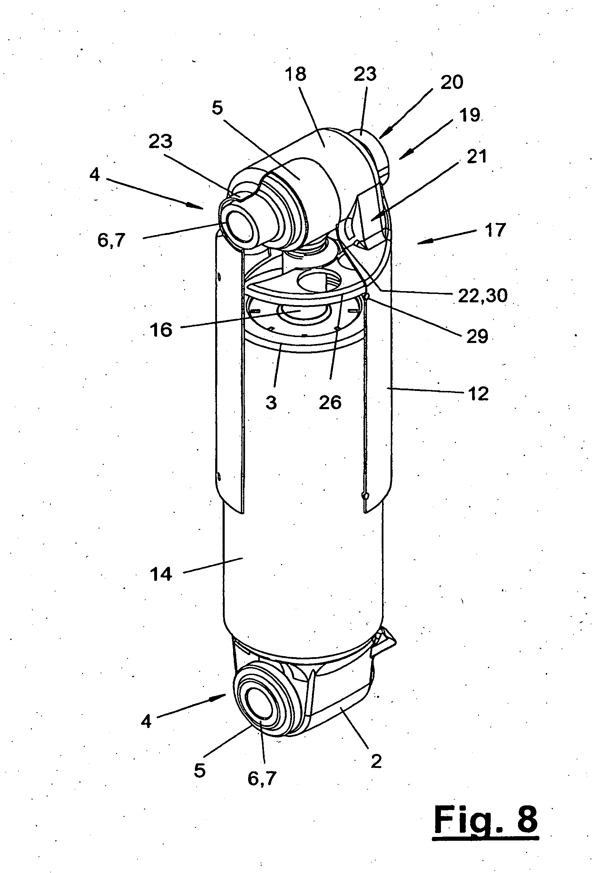

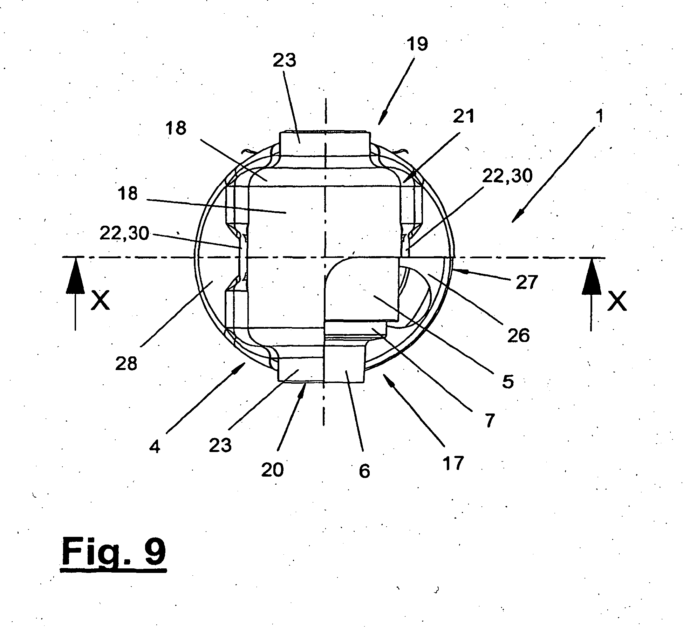

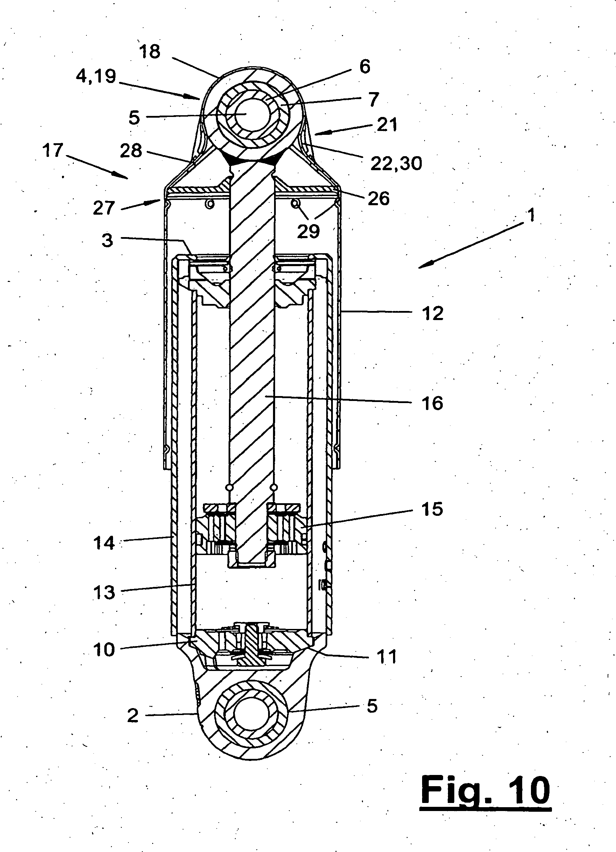

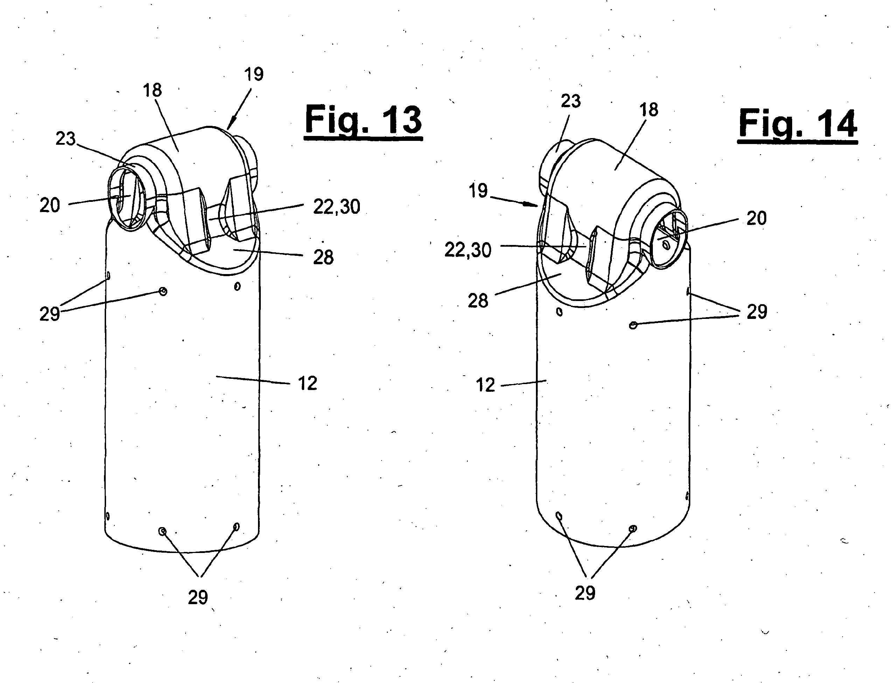

Figur 8 bis 14 zeigen eine Variante des Schutzrohrs (12) und des Stoßdämpfers (1), welcher wiederum als Zweirohrdämpfer ausgebildet ist und eine etwas andere Ventilgestaltung aufweist. Am oberen Ende der Kolbenstange (16) ist unterhalb des Lagerelements (4) ein seitlich abstehendes Stützelement (26) angeordnet, welches z.B. als eine kreisrunde Stützscheibe ausgebildet ist und ein oder mehrere Löcher oder Durchbrechungen in der Scheibenfläche aufweisen kann. Das Stützelement (26) kann durch eine Clipsverbindung oder dgl. mit der Kolbenstange (16) lösbar verbunden sein. Hierfür kann das Stützelement (26) außerdem einen radialen Schlitz besitzen und von der Seite her montiert werden. Im Innenbereich hat das ansonsten dünnwandige Stützelement (26) eine Wandverdickung mit einer am oberen Ende radial vorspringenden Rastnase, welche in eine entsprechende Ausnehmung am oberen Kolbenstangenende greift. Die Wandverdickung sorgt für eine führende und kippsichere Anlage an der Kolbenstange (16). Am äußeren Rand kann das Stützelement (26) einen nach unten schräg abgewinkelten ringförmigen Rand oder Flansch aufweisen. Figur 10 verdeutlicht diese Ausbildung und Anordnung im Längsschnitt. Eine perspektivische Ansicht des Stützelements (26) ist in der teilweise aufgebrochenen Darstellung von Figur 8 und in der Draufsicht von Figur 9 zu sehen.

Das Stützelement (26) kann zur zusätzlichen Führung und Stabilisierung des Schutzrohrs (12) dienen und mit diesem verbunden sein. Der Außendurchmesser des Stützelements (26) entspricht dem Innendurchmesser des Schutzrohrs (12). Das Stützelement (26) greift randseitig am Übergang zwischen der zylindrischen Wandung und dem konischen Dachteil (28) an und ist hier formschlüssig eingespannt und geführt. Unterhalb dieser Übergangsstelle sind im zylindrischen Mantel des Schutzrohrs (12) ein oder mehrere nach innen ragende Vorsprünge (29) angeordnet, die z.B. als Kranz von punktförmigen Einprägungen des Zylindermantels ausgebildet sind. An diesen Einprägungen (29) legt sich der abstehende Flansch des Stützelements (26) an, so dass der Rand des Stützelements (26) formschlüssig zwischen den Vorsprüngen (29) und der besagten Übergangsstelle ins Dachteil (28) eingespannt ist. Diese formschlüssige Verbindung (27) kann beim Überstülpen des Schutzrohrs (12) auf das Lagerelement (4) der Kolbenstange (16) geschlossen werden. Das konische Dachteil (28) geht weiter oben in die sattelförmigen Kappe (18) über.

In der Variante von Figur 8 bis 14 sind die Kappe (18) und die Clipsverbindung (21) anders als im ersten Ausführungsbeispiel ausgebildet. Die Clipsverbindung (21) besteht hier zwischen der Wandung der sattelförmigen Kappe (18) und dem hülsenförmigen Lagerauge (5). Die seitliche Kappenwandung weist beidseits des Lagerauges (5) eine nach innen vorspringende Einbuchtung (30) auf, welche das Lagerauge (5) unterhalb seiner Zentralachse bereichsweise formschlüssig untergreift. An diesem seitlichen Kappenwandbereich können außen stützende Rippen angeformt sein. Mit den Einbuchtungen (30) schnappt die Kappe (18) beim Überstülpen federnd über das Lagerauge (5). Durch diese Clipsverbindung (21) und das Stützelement (26) ist das Schutzrohr (12) in seiner Lage auf dem Lagerelement (4) nach allen Seiten hin formschlüssig gehalten und in seiner koaxialen Lage zur Kolbenstange (16) geführt.

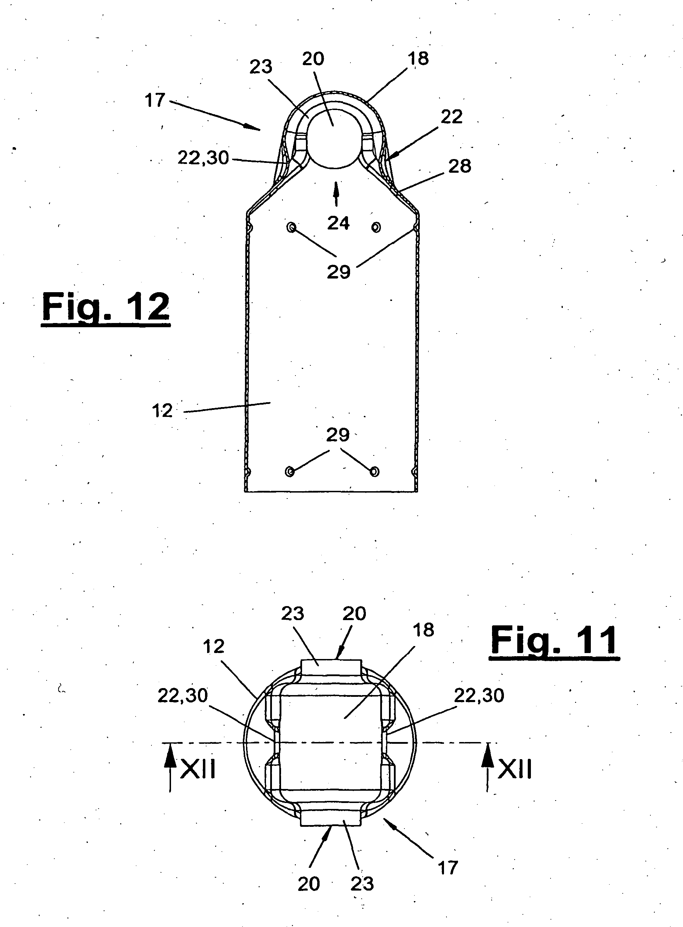

Figur (12) verdeutlicht ebenfalls diese Ausbildung der Kappe (18) und des Schutzrohrs (12) in einem Längsschnitt gemäß Schnittlinie XII-XII von Figur 11. Das Clipselement (22) ist auch in dieser Ausführungsform mit einer nach unten weisenden verengten Zugangsöffnung (24) versehen.

Figur 12 bis 14 verdeutlichen ferner, dass auch in dieser Ausführungsvariante die Kappe (18) das Lagerelement (4) umfangsseitig und stirnseitig mit einer angepassten Formgebung umschließt. Hierfür weist die Kappe (18) seitlich angeformte und in Lagerachsrichtung vorspringende Krägen (23) auf. Im Unterschied zum ersten Ausführungsbeispiel sind bei dieser zweiten Variante die von den Krägen (23) umschlossenen Augen (20) oval ausgebildet und größer als die kreisrunden Lagerstifte (6). Die Krägen (23) können in beiden Ausführungsformen die Lagerstifte (6) zumindest bereichsweise umschließen, wobei in der Variante von Figur 8 bis 14 die Augen (20) einen Freiraum unterhalb der Lagerstifte (6) aufweisen. Ansonsten bildet die Kappe (18) auch in dieser Ausführungsform eine Lageraufnahme (19).

Abwandlungen der gezeigten Ausführungsformen sind in verschiedener Weise möglich. Die Kappe (18) kann eine andere als die gezeigte abgerundete und sattelartige Außenform haben. Ferner kann die Clipsverbindung (21) in anderer Weise ausgebildet sein und anders mit dem Lagerelement (4) zusammenwirken. Zum Beispiel können innenseitige Clipselemente in Form von kragenartigen Schnappringen oder dergl. vorhanden sein, die am Lagerauge (5) angreifen. Ferner kann auf den zusätzlichen Formschluss des Lagerstiftes (6) mit den Augen (20) verzichtet werden. In weiterer Abwandlung kann das Lagerelement (4) in anderer Weise ausgestaltet sein. Zum Beispiel kann der Lagerstift (6) massiv als Lagerbolzen ausgebildet sein. Variabel ist auch die Ausgestaltung der anderen Komponenten des Stoßdämpfers (1). Dieser kann insbesondere als Einrohrstoßdämpfer ausgestaltet sein. Daneben sind beliebige andere Zylinderformen in Verbindung mit beliebigen Dämpffluiden möglich. Hierbei kann es sich insbesondere um hydraulische und/oder pneumatische Zylinder oder Dämpfer handeln.

### BEZUGSZEICHENLISTE

- 1: Stossdämpfer
- 2: Endstück, Bodenstück
- 3: Endstück, Kopfstück
- 4: Lagerelement
- 5: Lagerauge
- 6: Lagerstift
- 7: Hülse
- 8: Mantel
- 9: Verdickung
- 10: Bodenventil
- 11: Ventilsitz
- 12: Schutzrohr
- 13: Arbeitszylinder, Innenrohr
- 14: Außenrohr
- 15: Kolben
- 16: Kolbenstange
- 17: Kopfbereich
- 18: Kappe
- 19: Stiftaufnahme
- 20: Auge
- 21: Clipsverbindung
- 22: Clipselement
- 23: Kragen
- 24: Zugangsöffnung
- 25: Überstand
- 26: Stützelement, Stützscheibe
- 27: Verbindung, Schnappverbindung
- 28: Dachteil, Dachschräge
- 29: Einprägung
- 30: Einbuchtung

## Patentansprüche

1. Schutzrohr für Stossdämpfer (1) mit einem Lagerelement (4) am Ende einer Kolbenstange (16), **dadurch gekennzeichnet, dass** das Schutzrohr (12) im Kopfbereich (17) eine Kappe (18) mit einem Clipselement (22) zur Bildung einer Clipsverbindung (21) mit dem Lagerelement (4) aufweist.

2. Schutzrohr nach Anspruch 1, **dadurch**
**gekennzeichnet, dass** die Kappe (18) das Lagerelement (4) umhüllt und eine Lageraufnahme (19) mit seitlichen Augen (20) aufweist.

3. Schutzrohr nach Anspruch 1 oder 2, **dadurch**
**gekennzeichnet, dass** die Kappe (18) an das aus Kunststoff bestehende, elastisch verförmbare Schutzrohr (12) angeformt ist.

4. Schutzrohr nach Anspruch 1, 2 oder 3, **dadurch**
**gekennzeichnet, dass** das Clipselement (22) mindestens einen gebogenen, federnden Kragen (23) mit, einer verengten Zugangsöffnung (24) zum Aufstecken auf ein axial über das Lagerauge (5) vorstehendes Teil, insbesondere einen Lagerstift (6), aufweist.

5. Schutzrohr nach Anspruch 1, 2 oder 3, **dadurch**
**gekennzeichnet, dass** das Clipselement (22) seitliche Einbuchtungen (30) an der Kappenwand mit einer verengten Zugangsöffnung (24) zum Aufstecken auf das Lagerauge (5) aufweist.

6. Schutzrohr nach Anspruch 4 oder 5, **dadurch**
**gekennzeichnet, dass** der Kragen (23) oder die Einbuchtungen (30) und die Zugangsöffnung (24) an die Form des Lagerauges (5) oder eines Lagerstifts (6) des Lagerelements (4) angepasst sind.

7. Schutzrohr nach einem der vorhergehenden Ansprüche, **dadurch gekennzeichnet, dass** das Schutzrohr (12) unterhalb des Lagerelements (4) mit einem die Kolbenstange (16) umgebenden Stützelement (26) verbunden ist.

8. Schutzrohr nach einem der vorhergehenden Ansprüche, **dadurch gekennzeichnet, dass** das Schutzrohr (12) Einprägungen (29) zur Bildung einer formschlüssigen Verbindung (27) mit einem scheibenförmigen Stützelement (26) aufweist.

9. Stossdämpfer mit einer Kolbenstange (16), einem am Stangenende angeordneten Lagerelement (4) und einem Schutzrohr (12), **dadurch**
**gekennzeichnet, dass** das Schutzrohr (12) im Kopfbereich (17) eine Kappe (18) aufweist und auf das Lagerelement (4) mit einer Clipsverbindung (21) aufgesteckt ist.

10. Stossdämpfer nach Anspruch 9, **dadurch**
**gekennzeichnet, dass** die Kolbenstange (16) unterhalb des Lagerelements (4) ein seitlich abstehendes Stützelement (26) aufweist, welches mit dem Schutzrohr (12) formschlüssig verbunden ist.

11. Stossdämpfer nach Anspruch 9 oder 10, **dadurch**
**gekennzeichnet, dass** das Stützelement (26) scheibenförmig ausgebildet und an der Kolbenstange (16) aufgeclipst ist.

12. Stossdämpfer nach Anspruch 9, 10 oder 11, **dadurch gekennzeichnet, dass** das Schutzrohr (12) nach einem der Ansprüche 1 bis 8 ausgebildet ist.

## Claims

1. Sheath tube for shock absorbers (1) having a bearing element (4) at the end of a piston rod (16), **characterized in that** the sheath tube (12) has in the head region (17) a cap (18) having a clip element (22) for forming a clip connection (21) with the bearing element (4).

2. Sheath tube according to Claim 1, **characterized in that** the cap (18) encloses the bearing element (4) and has a bearing receptacle (19) having lateral eyes (20).

3. Sheath tube according to Claim 1 or 2, **characterized in that** the cap (18) is integrally formed on the elastically deformable sheath tube (12) made of plastic.

4. Sheath tube according to Claim 1, 2 or 3, **characterized in that** the clip element (22) has at least one curved, flexible collar (23) having a narrowed access opening (24) for slipping onto a part, in particular a bearing pin (6), projecting axially beyond the bearing eye (5).

5. Sheath tube according to Claim 1, 2 or 3, **characterized in that** the clip element (22) has lateral niches (30) on the cap wall, having a narrowed access opening (24) for slipping onto the bearing eye (5).

6. Sheath tube according to Claim 4 or 5, **characterized in that** the collar (23) or the niches (30) and the access opening (24) are adapted to the shape of the bearing eye (5) or of a bearing pin (6) of the bearing element (4).

7. Sheath tube according to one of the preceding claims, **characterized in that** the sheath tube (12) is connected below the bearing element (4) to a supporting element (26) surrounding the piston rod (16).

8. Sheath tube according to one of the preceding claims, **characterized in that** the sheath tube (12) has embossments (29) for forming a positive-locking connection (27) with a disc-shaped supporting element (26).

9. Shock absorber having a piston rod (16), a bearing element (4) arranged on the rod end, and a sheath tube (12), **characterized in that** the sheath tube (12) has a cap (18) in the head region (17) and is slipped onto the bearing element (4) using a clip connection (21).

10. Shock absorber according to Claim 9, **characterized in that** the piston rod (16), below the bearing element (4), has a laterally projecting supporting element (26) which is connected to the sheath tube (12) in a positive-locking manner.

11. Shock absorber according to Claim 9 or 10, **characterized in that** the supporting element (26) is of disc-shaped design and is clipped in place on the piston rod (16).

12. Shock absorber according to Claim 9, 10 or 11, **characterized in that** the sheath tube (12) is designed according to one of Claims 1 to 8.

## Revendications

1. Tube protecteur pour amortisseur (1) avec un élément de palier (4) à l'extrémité d'une tige de piston (16), **caractérisé en ce que** le tube protecteur (12) comprend dans la région de tête (17) une coiffe (18) avec un élément à déclic (22) pour former un assemblage à déclic (21) avec l'élément de palier (4).

2. Tube protecteur selon la revendication 1, **caractérisé en ce que** la coiffe (18) enveloppe l'élément de palier (4) et présente un logement de palier (19) avec des yeux latéraux (20).

3. Tube protecteur selon la revendication 1 ou 2, **caractérisé en ce que** la coiffe (18) est façonnée sur le tube protecteur (12) élastiquement déformable constitué de matière plastique.

4. Tube protecteur selon la revendication 1, 2 ou 3, **caractérisé en ce que** l'élément à déclic (22) présente au moins une collerette élastique cintrée (23) avec une ouverture d'accès rétrécie (24) pour son engagement sur une pièce, en particulier une broche de palier (6), saillant axialement au-delà de l'oeil de palier (5).

5. Tube protecteur selon la revendication 1, 2 ou 3, **caractérisé en ce que** l'élément à déclic (22) présente des creux latéraux (30) sur la paroi de la coiffe avec une ouverture d'accès rétrécie (24) pour l'engagement sur l'oeil de palier (5).

6. Tube protecteur selon la revendication 4 ou 5, **caractérisé en ce que** la collerette (23) ou les creux (30) et l'ouverture d'accès (24) sont adaptés à la forme de l'oeil de palier (5) ou d'une broche de palier (6) de l'élément de palier (4).

7. Tube protecteur selon l'une quelconque des revendications précédentes, **caractérisé en ce que** le tube protecteur (12) est assemblé en dessous de l'élément de palier (4) à un élément d'appui (26) entourant la tige de piston (16).

8. Tube protecteur selon l'une quelconque des revendications précédentes, **caractérisé en ce que** le tube protecteur (12) présente des empreintes (29) destinées à former un assemblage par complémentarité de forme (27) avec un élément d'appui (26) en forme de disque.

9. Amortisseur avec une tige de piston (16), un élément de palier (4) disposé à l'extrémité de la tige et un tube protecteur (12), **caractérisé en ce que** le tube protecteur (12) présente une coiffe (18) dans la région de tête (17) et est engagé sur l'élément de palier (4) par un assemblage à déclic (21).

10. Amortisseur selon la revendication 9, **caractérisé en ce que** la tige de piston (16) présente en dessous de l'élément de palier (4) un élément d'appui (26) saillant latéralement, qui est assemblé par complémentarité de forme au tube protecteur (12).

11. Amortisseur selon la revendication 9 ou 10, **caractérisé en ce que** l'élément d'appui (26) est réalisé en forme de disque et est posé à déclic sur la tige de piston (16).

12. Amortisseur selon la revendication 9, 10 ou 11, **caractérisé en ce que** le tube protecteur (12) est réalisé selon l'une quelconque des revendications 1 à 8.
